(19) Europäisches Patentamt
European Patent Office
Office européen des brevets

(11) **EP 1 429 857 B1**

(12) **EUROPÄISCHE PATENTSCHRIFT**

(45) Veröffentlichungstag und Bekanntmachung des Hinweises auf die Patenterteilung:
**08.12.2010 Patentblatt 2010/49**

(21) Anmeldenummer: **02764873.2**

(22) Anmeldetag: **06.09.2002**

(51) Int Cl.:
*B01D 3/42* (2006.01)    *G05B 13/04* (2006.01)

(86) Internationale Anmeldenummer:
**PCT/EP2002/009969**

(87) Internationale Veröffentlichungsnummer:
**WO 2003/024556 (27.03.2003 Gazette 2003/13)**

(54) **VERFAHREN ZUR PROZESSFÜHRUNG DER TRENNUNG VON MEHRSTOFFGEMISCHEN**

METHOD FOR CONTROLLING THE PROCESS OF SEPARATING MIXTURES CONTAINING SEVERAL SUBSTANCES

PROCEDE DE COMMANDE DE PROCESSUS DE LA SEPARATION DE MELANGES A PLUSIEURS COMPOSANTS

(84) Benannte Vertragsstaaten:
**CH DE FR GB IT LI NL**

(30) Priorität: **19.09.2001 DE 10146103
19.11.2001 DE 10156720**

(43) Veröffentlichungstag der Anmeldung:
**23.06.2004 Patentblatt 2004/26**

(73) Patentinhaber: **Bayer Technology Services GmbH
51368 Leverkusen (DE)**

(72) Erfinder:
• **MEEUWSSEN, Frank
4797 BD Willemstad (NL)**
• **RHIEL, Franz, Ferdinand
41540 Dormagen (DE)**
• **HAUSCHILD, Torsten
51469 Bergisch Gladbach (DE)**
• **GERLACH, Martin
41539 Dormagen (DE)**

(56) Entgegenhaltungen:
**DE-A- 4 127 536    US-A- 5 260 865**

**Beschreibung**

Die Erfindung betrifft ein Verfahren zur Prozessführung der Trennung von Mehrstoffgemischen bekannter Zusammensetzung in Destillationskolonnen. Im Besonderen betrifft die Erfindung die Trennung von Mehrstoffgemischen mit eng beieinander liegenden Siedepunkten, z.B. Isomerengemische, die in ihre isomeren Stoffkomponenten mit hoher Produktreinheit aufgetrennt werden.

Bei der Nitrierung von Toluol erhält man aus der Reaktionsstufe ein Isomerengemisch bestehend aus ortho-, meta- und para-Nitrotoluol sowie Di-Nitrotoluol-Isomere und weiterer Stoffkomponenten. Die technische Aufgabe besteht darin, die Isomeren o-, m- und p-Nitrotoluol aus diesem Stoffgemisch abzutrennen und in hoher Reinheit von mindestens 99,70 % zu gewinnen. Dies geschieht in einer Reihe hintereinander geschalteter Destillationskolonnen, die zum Teil auch über Kreislaufströme miteinander verbunden sind. Infolge der geringen Siedepunktsdifferenzen der zu gewinnenden Nitrotoluol-Isomeren sind zur Trennung Destillationskolonnen mit einer hohen Trennstufenzahl und hohem Rücklaufverhältnis erforderlich. Im Besonderen erfordert die Trennung von m-, und p-Nitrotoluol, deren Siedepunktdifferenz nur etwa 3 K beträgt, eine hohe Trennstufenzahl. Aus diesem Grund erfolgt die Trennung dieser Isomeren in einer Kolonne, die apparativ in zwei nebeneinanderstehende Kolonnenteile mit insgesamt einem Verdampfer und einem Kondensator aufgeteilt ist. Aufgrund der geringen Temperatursensitivität ist es nicht möglich, die Konzentration von p-Nitrotoluol, das am Sumpf des zweiten Kolonnenteils anfällt, über eine Kolonnentemperatur als Hilfsregelgröße zu regeln.

Da Kolonnentemperaturen als Hilfsregelgrößen zur Einhaltung der Produktspezifikation von p-Nitrotoluol nicht verwendet werden können, bietet sich der Einsatz von Online-Nahinfrarot-Spektroskopie-Geräten zur Prozessführung an. Allerdings zeigt sich, dass deren Einsatz zur Analyse des Endproduktes, d.h. am Sumpfausgang oder Kolonne zwei wesentliche Nachteile hat. Dies sind:

Bei der Messung der Konzentration des Endproduktes (p-Nitrotoluol) liefert die NIR-Analyse Messwerte, die aufgrund der hohen Konzentration von p-Nitrotoluol nicht die erforderliche Genauigkeit aufweisen.

Selbst wenn es gelänge, mit der Analyse die für die Prozessführung erforderliche Genauigkeit zu erzielen, so ist die Anbringung des Messgeräts im Endproduktstrom nicht sinnvoll, da dort Konzentrationsabweichungen zu spät erfasst werden und damit zu spät entgegen gesteuert wird.

Im Endproduktstrom ist auf Grund der Produkteigenschaft während der Anfahrprozesse des Verfahrens mit erheblichen Verunreinigungen und Verfärbungen zu rechnen. Damit ist die Anwendung der Spektroskopie als Messverfahren für die Regelung des Prozesses ausgeschlossen.

Eigene Untersuchungen haben gezeigt, dass im Produktstrom zwischen den beiden Kolonnenteilen die höchste Sensitivität bei Konzentrationsänderungen des Sumpfproduktes vorliegt. In dem genannten Produktstrom ist die Konzentrationsänderung um den Faktor 10 höher als die sich daraus ergebende Konzentrationsänderung im Sumpfprodukt. Darüber hinaus liegt in dem Produktstrom zwischen den Kolonnen eine gegenüber dem Endprodukt niedrigere p-Nitrotoluol-Konzentration vor. In diesem Produktstrom wird mit dem Analysengerät daher eine höhere Genauigkeit erzielt. Sie ist etwa doppelt so hoch wie bei einer Messung im Endprodukt.

Der Erfindung liegt die Idee zugrunde, das Analysengerät in den Produktstrom zwischen den beiden Kolonnen anzubringen. Bindet man das Analysengerät dann in einen Regelkreis ein, so kann man damit die Konzentration in dem Produktstrom zwischen den beiden Kolonnenteilen konstant halten. Es ist damit jedoch nicht gewährleistet, dass auch die Konzentration des am Sumpf des zweiten Kolonnenteils abgezogenen Endprodukts konstant bleibt. Der Grund dafür liegt darin, dass die Trennleistung des zweiten Kolonnenteils, das zwischen der Stelle der Geräteanbringung und dem Kolonnensumpf liegt, aufgrund von Stelleingriffen und Störeinflüssen ständigen Änderungen unterliegt.

Die Aufgabe der Erfindung wird erfindungsgemäß dadurch gelöst, dass das Online-Analysengerät bei der oben beschriebenen Anordnung mit einem Online-Prozessmodell gekoppelt wird.

Gegenstand der Erfindung ist ein Verfahren zur Prozessführung von Destillationskolonnen mit einem unteren Kolonnenteil und einem oberen Kolonnenteil unter Regelung der Sumpfkonzentration, wobei mehrere Komponenten A, B vorzugsweise mit eng beieinander liegenden Siedepunkten von einander getrennt werden und wobei die am Sumpf des unteren Kolonnenteils anfallende Stoffkomponente mit hoher Reinheit gewonnen wird, **dadurch gekennzeichnet,**

a) **dass** die Konzentration der Komponenten A, B an einer Stelle der Kolonne außerhalb des Sumpf- oder Kopfbereiches der Kolonne insbesondere an einer Stelle die im mittleren Bereich zwischen dem obersten Zehntel und dem untersten Zehntel der Länge der Gesamtkolonne angeordnet ist mit einem Analysengerät, insbesondere einem Nahinfrarot-Spektrometer online gemessen wird,

b) dass die nach a) gemessene Konzentration mindestens einer der Komponenten A oder B von einem Online-Prozessmodell in einer Rechnereinheit eines Prozessleitsystems übernommen und benutzt wird, und dass das Prozessmodell unter Verwendung des Messwertes und weiterer direkt an der Kolonne gemessenen Größen ausgewählt aus Temperatur, Druck und Stoff-Mengenströme, insbesondere von Zulauf, Heizmittelzufuhr, insbesondere Dampfzufuhr und Rücklauf, eine Sumpfkonzentration $X_{Asu}$ berechnet innerhalb einer durch das Prozessleitsystem und die Regelungstechnik bedingten Intervallzeit,

c) dass die unter Verwendung des Prozessmodells berechnete Sumpfkonzentration $X_{Asu}$ zur Regelung verwendet wird, indem die vom Modell berechnete Sumpfkonzentration $X_{Asu}$ regelungstechnisch wie der Istwert der Regelgröße der Sumpfkonzentration behandelt wird,

d) dass bestimmte Parameter des Prozessmodells physikalisch interpretierbare Größen, insbesondere die theoretische Stufenzahl bezogen auf Packungen oder Füllkörper und/oder den Bodenwirkungsgrad darstellen, die in größeren Zeitintervallen insbesondere von mehreren Stunden, gegebenenfalls auch mehreren Tagen dem jeweiligen Kolonnenzustand, z.B. dem Verschmutzungsgrad, angepasst werden auf der Basis von Analysen des Endproduktes und Eingabe der Analysendaten in das Prozessmodell.

In einer bevorzugten Variante kann das Verfahren auch für eine in mindestens zwei Teilkolonnen geteilte Kolonne angewendet werden, wobei die Konzentrationsmessung a) im Bereich zwischen den Teilkolonnen erfolgt.

Bevorzugt ist eine Variante des Verfahrens mit Teilkolonnen, **dadurch gekennzeichnet, dass** anstelle der Temperaturen und Mengenströme von Zulauf und Rücklauf sowie der Heizenergie insbesondere der Dampfmenge auch die Mengenströme zwischen den beiden Teilkolonnen sowie deren Temperaturen im Prozessmodell verwendet werden.

Bevorzugt ist in dem Verfahren das Analysengerät im Bereich zwischen dem obersten Fünftel und dem untersten Fünftel der Länge der Gesamtkolonne angeordnet.

Alternativ kann der Messwert des Flüssigkeitsstromes zwischen den beiden Teilkolonnen zusammen mit der Heizenergie im Prozessmodell verwendet werden. Anstelle eines NIR-Spektrometers können auch andere Analysengeräte eingesetzt werden, z.B. Gaschromatographen, UV-VIS-Spektrometer, Flüssigkeitschromatographen.

In den Verfahren werden bevorzugt Stoffgemische mit höchstens 20 K insbesondere 10 K auseinander liegenden Siedepunkten getrennt.

Die Konzentration wird bei gegebener Temperatursensitivität bevorzugt über eine Temperatur- und Druckmessung ermittelt.

In einer alternativen Variante des Verfahrens kann die Kombination von Online-Analytik und Prozessmodell auch zur Konzentrationsregelung des Kopfproduktes verwendet werden.

Das Verfahren wird insbesondere für die Isomerentrennung von Nitrotoluol verwendet und bevorzugt wie folgt durchgerührt.

Das Analysengerät misst die Konzentration von einer Komponente (z.B. p-Nitrotoluol) im Produktstrom zwischen den beiden Kolonnenteilen und gibt diese Information an das Prozessmodell weiter. Aufbauend auf dieser Information berechnet das Modell unter Nutzung von direkt an der Kolonne gemessenen Größen z.B. Mengenströmen, Dampfzufuhr und Temperaturen die p-Nitrotoluol-Konzentration im Sumpfprodukt. Der vom Modell ermittelte Wert wird als Istwert der Regelgröße behandelt. Die Differenz zwischen Soll- und Istwert ist Eingangsgröße in den Regler, insbesondere in einen PID-Regler-Baustein des Prozessleitsystems. Bei Abweichungen zwischen Soll- und Istwert ändert der Regler die Stellgröße, d.h. die Dampfzufuhr.

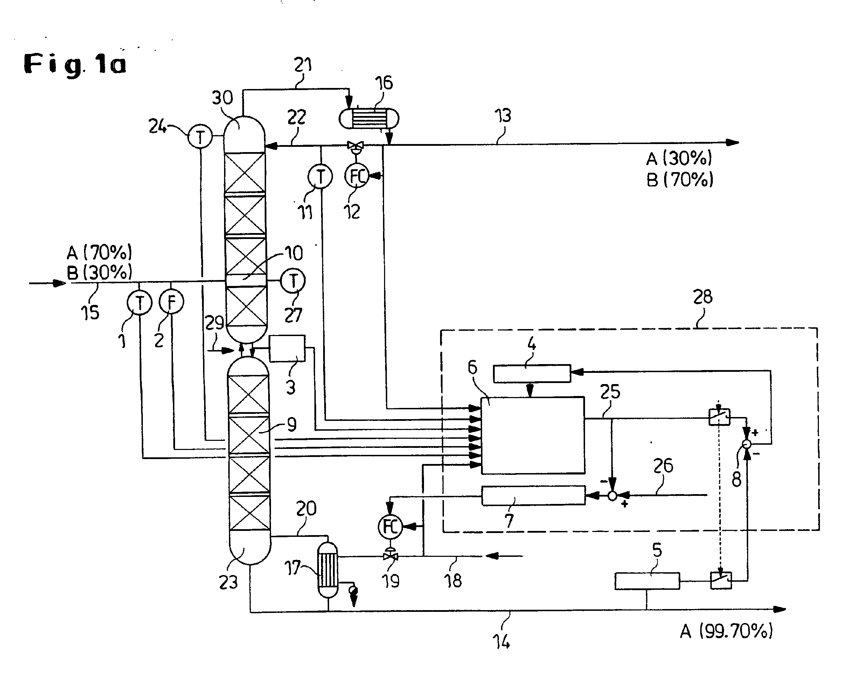

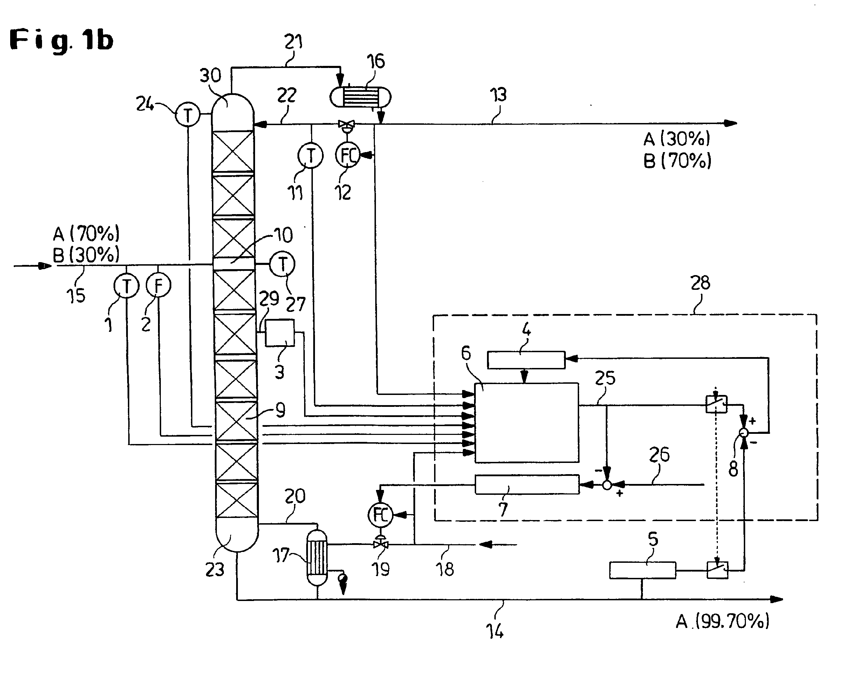

Der vom Online-Prozessmodell berechnete Wert für die Sumpfkonzentration hat prädiktiven Charakter. Störungen, eingeleitet z.B. durch eine Änderung von Mengenstrom oder Konzentration im Zulauf, werden an der Stelle des Geräteanschlusses zwischen den beiden Kolonnen erfasst, bevor sie den Sumpf erreichen. Das Modell benutzt den aktuell gemessenen Konzentrationswert und berechnet anhand der gerade vorliegenden Trennleistung den sich daraus ergebenden neuen Konzentrationswert für das Sumpfprodukt. Dieser Wert ist die Konzentration, die sich nach ca. 20 bis 30 Minuten im Sumpfprodukt einstellen würde, wenn nicht eingegriffen werden würde. Aufgrund der direkten Kopplung von Modell und Regler ändert der Regler die Dampfzufuhr, bevor die Konzentrationsstörung den Sumpf erreicht. Durch die Rückkopplung der Dampfmengenänderung über das Modell zum Regler erfolgt die Änderung der Dampfmenge nur soweit, dass sie die Konzentrationsänderung im Produktstrom zwischen den Kolonnenteilen mit einer geänderten Trennleistung des zweiten Kolonnenteils ausgleicht. Das Konzept verwirklicht damit gleichzeitig eine inhärente Stellgrößenbeschränkung. Durch das frühzeitige Erkennen der Störung sowie den rechtzeitigen und dosierten Reglereingriff wird die Arbeitsweise der Prozessführung genau und robust. In Fig. 1a und 1b ist erkennbar, dass die Messwerte der Zulaufmenge und der Zulauftemperatur, sowie die Rücklaufmenge, die Rücklauf- und die Kopftemperatur in das Prozessmodell eingehen und damit auch eine Feedforward-Strategie verwirklicht wird.

Das Prozessmodell benutzt zur Berechnung der Sumpfkonzentration das Flüssigkeits-/- Dampfverhältnis sowie die theoretische Stufenzahl des zweiten Kolonnenteils, die von den Kolonneneinbauten wie z.B. Böden oder Packung abhängt. Da sich die theoretische Stufenzahl z.B. durch Verschmutzung ändern kann, muss das Ausgangssignal des Prozessmodells in bestimmten Zeitabständen von z.B. je 24 Stunden anhand von Analysendaten überprüft werden. Bei Abweichungen zwischen Modell- und Analysenwert werden die Modellparameter automatisch geändert. Im vorliegenden Fall ist der anzupassende Modellparameter die theoretische Trennstufenzahl. Dies ist eine physikalisch interpretierbare Größe. Deren Wert und Änderung zeigt den Zustand der Kolonneneinbauten an und kann z.B. als Information zur Festlegung von Instandhaltungsintervallen genutzt werden.

Die Numerik des Prozessmodells erlaubt dessen Einbindung in geschlossene Regelkreise. In den regelungstechnisch notwendigen Intervallzeiten bis zu 0,5 s berechnet das Modell die neuen Konzentrationswerte. Der Vorteil des Prozessmodells liegt darin, dass dessen Algorithmus robust ist und kein Iterationsverfahren enthält, wie dies z.B. in US-A-5,260,865 der Fall ist. Im Vergleich zu dem in dieser Druckschrift beschriebenen Verfahren, das auf der im Zulauf gemessenen Konzentration aufbaut, geht das vorliegende Prozessmodell von Konzentrationsmessungen an den Stellen der Kolonne aus, wo die Sensitivität am höchsten ist.

Gegenüber anderen Prozessführungskonzepten, in denen die Sollwerte von Hilfsregelgrößen wie z.B. Temperaturen eingestellt werden, hat die vorliegende Prozessführung auch den Vorteil, dass der Anlagenfahrer die gewünschte Konzentration im Endprodukt als Sollwert der Regelgröße explizit vorgibt.

Die Erfindung wird nachfolgend anhand der Figuren 1a und 1b durch die Beispiele, welche jedoch keine Beschränkung der Erfindung darstellen, näher erläutert.

Fig. 1a     zeigt das Verfahrensschema einer Destillationsanlage mit zwei Teilkolonnen

Fig. 1b     zeigt das Verfahrensschema einer Destillationsanlage mit einer Kolonne

**Beispiel**

In der Figur 1a ist ein Verfahrensschema für eine Isomerentrennung dargestellt. Ein Gemisch mit 70 %-Anteil des Isomers A (p-Nitrotoluol) wird in ein Kopfprodukt mit 30 % und ein Sumpfprodukt mit 99,70 % Isomeranteil A aufgetrennt.

Über eine Zuleitung 15 wird das Stoffgemisch (p-Nitrotoluol A, m-Nitrotoluol B) dem oberen Kolonnenteil 10 einer zweiteiligen Destillationskolonne 9, 10 zugeführt, der Einlass befindet sich im unteren Drittel des Kolonnenteils 10. Der Sensor 1 erfasst die Temperatur und Sensor 2 die Zulaufmenge des Gemisches A, B.

Am Kopf 30 der Kolonne 10 mit Temperaturfühler 24 wird die Leichtsiederfraktion A, B über die Leitung 21 an einen Kondensator 16 kondensiert und zum Teil über die Leitung 13 entnommen. Der andere Teil wird als Rücklauf 22 über ein Ventil mit Mengenregler 12 und Temperaturmessgerät 11 zum Kopfteil 30 zurückgeführt.

Zwischen dem oberen Kolonnenteil 10 und unterem Kolonnenteil 9 ist im Bereich der Verbindungsleitungen eine Messstelle 29 mit einem Nahinfrarot-Spektrometer 3 angeordnet.

Am Sumpf 23 des unteren Kolonnenteiles 9 ist eine Sumpfentnahmeleitung 14 angebracht, von der ein Teil des Sumpfproduktes über den Verdampfer 17 und die Leitung 20 zum Kolonnenteil 9 zurückgeführt wird. Der Verdampfer 17 wird über das Regelventil 19 aus der Dampfleitung 18 mit Dampf beaufschlagt.

Die Messwerte der Sensoren 1, 2, 24, 11, 12, 18 und des Analysengerätes 3 werden dem Rechner 6 zugeleitet.

An der Entnahmestelle 5 wird die Probe des Sumpfproduktes in bestimmten Zeitabständen (z.B. einmal täglich) auf ihre Zusammensetzung analysiert und mit dem berechneten Wert der Sumpfkonzentration verglichen (Vergleicher 8 des Prozessleitsystems 28, das den Rechner 6 umfasst).

Das hier eingesetzte Online-Prozessmodell 6, für das binäre Stoffsystem A, B, ist aus den stationären Gesetzmäßigkeiten der Thermo- und Hydrodynamik hergeleitet und so vereinfacht worden, dass dies einerseits das Prozessverhalten im vorgesehenen Arbeitsbereich in der für die Prozessführung notwendigen Genauigkeit wiedergibt und andererseits durch eine vereinfachte Numerik im Prozessleitsystem 28 abläuft und die für die Regelung erforderlichen Ergebnisse innerhalb der vorgegebenen Intervallzeit liefern kann.

Das Ergebnis des Online-Prozessmodells hat prädiktiven Charakter. So gibt das Modell im Abtriebsteil 9 bei einer Störung z.B. einem Anstieg der Leichtsiederkonzentration im Zulauf dessen zu erwartenden Anstieg im Sumpfprodukt mit einer Vorlaufzeit von ca. 20 Minuten wieder. Das Modell berechnet die Sumpfkonzentration der Komponente A aus der vom Analysengerät 3 an der Messstelle 29 gemessenen Konzentration von A gemäß:

Gleichung 1:

$$X_{A,\,Su} = 1 - \left(1 - X_{A,\,online\text{-}Analyse}\right) \cdot \cfrac{m}{1 - (1-m) \cdot \cfrac{\left(\dfrac{m}{a}\right)^{n+1} - 1}{\left(\dfrac{m}{a}\right) - 1}}$$

Die Konzentration der Komponente A des aus dem Sumpf austretenden Produktstroms entspricht der Sumpfkonzentration $X_{A, su}$ . Diese ergibt sich aus der mit dem Online-Analysengerät gemessenen Konzentration der Komponente A an der Messstelle 29 $X_{A, online-Analyse}$ und der Trennleistung zwischen dieser Messstelle und dem Kolonnensumpf 23. Zur Berechnung der Trennleistung stehen dem Modell u.a. das Flüssigkeits- zu Dampf -Verhältnis *a* sowie die theoretische Trennstufenzahl zwischen Messstelle 29 und Kolonnensumpf 23 n zur Verfügung.

Hierzu werden noch die folgenden Gleichungen 2 bis 6 verwendet:

Gleichung 2:

$$a = \frac{F}{D}$$

Gleichung 3:

$$F = R_{int} + \dot{m}_{Feed, int}$$

Gleichung 4:

$$R_{int} = R \cdot \left[ 1 + \frac{c_{Ko}}{r_{Ko}} \cdot \left( \vartheta_H - \vartheta_R \right) \right]$$

Gleichung 5:

$$\dot{m}_{Feed, int} = \dot{m}_{Feed} \cdot \left[ 1 + \frac{c_{Feed}}{r_{Feed}} \cdot \left( \vartheta_{Kol, Fe} - \vartheta_{Feed} \right) \right]$$

Gleichung 6:

$$D = \left( \frac{r_D}{r_{Su}} \right) \cdot \dot{m}_D$$

Das Flüssigkeits- zu Dampf-Verhältnis *a* ist zu berechnen aus der Zulaufmenge 2 in Kombination mit der Temperaturdifferenz ermittelt aus den Temperaturen 1 und 27, der Rücklaufmenge 12 in Kombination mit der Temperaturdifferenz ermittelt aus den Temperaturen 11 und 24 und der Dampfmenge18.

Die Trennstufenzahl n ist abhängig von der den Stoffaustausch bestimmenden Hydrodynamik sowie vom Zustand der Packung und des Flüssigkeitsverteilers. Die Trennstufenzahl wird angepasst mittels Laboranalysen unter Verwendung von

Gleichung 7:

$$n = \frac{\ln\left[\left(1 - \frac{a}{m}\right) \cdot \frac{\left(1 - X_{A,\,Laboranalyse}\right) - m \cdot \left(1 - X_{A,\,online\text{-}Analyse}\right)}{\left(1 - X_{A,\,Laboranalyse}\right) - m \cdot \left(1 - X_{A,\,Laboranalyse}\right)} + \frac{a}{m}\right]}{\ln\left(\frac{m}{a}\right)}$$

In größeren Zeitabständen werden Proben 5 gezogen, um die Konzentration im Produktstrom 14 zu bestimmen, die der Sumpfkonzentration entspricht. Die Konzentration wird verglichen 8 mit der berechneten Konzentration 25 aus dem Prozessmodell. Bei Abweichungen zwischen gemessener und berechneter Konzentration wird die Trennstufenzahl des Prozessmodells angepasst (Modellanpassung 4).

Da das Modell den erhöhten Leichtsiederanteil (Leichtsieder ist hier die Komponente B) an der Messstelle mit der gerade vorhandenen Trennleistung, die vor der Störung zur Einhaltung der Sumpfkonzentration ausreichte, verbindet, wird ein höherer Leichtsiederanteil in der Sumpfkonzentration errechnet, der noch nicht vorhanden ist und erst im Gleichgewichtszustand erreicht werden würde, d.h. nach ca. 20 Minuten. Der vom Modell ermittelte Wert 25 wird dem Regler als Istwert der Regelgröße zugeführt. Der Regler 7 erhöht sofort die Dampfmenge 18 soweit, bis der erhöhte Leichtsiederanteil an der Messstelle 29 zusammen mit dem erniedrigten Flüssigkeitszu Dampf-Verhältnis wieder zum Sollwert 26 der Sumpfkonzentration führt. Da die Änderung der Dampfmenge 18 über das Modell ohne Zeitverzug zum Regler 7 zurückgeführt wird, ergibt sich eine robuste Regelung. Dies wird unterstützt durch die Tatsache, dass der Regler 7 eingreift, bevor die Störung den Sumpf 23 erreicht hat und dass infolge des frühzeitigen Eingreifens die Stellgrößenänderungen 19 dosiert erfolgen können.

Im Falle einer Verringerung des Leichtsiederanteils an der Messstelle 29 wird die Dampfmenge nur soweit zurückgefahren bis der erniedrigte Leichtsiederanteil zusammen mit dem erhöhten Flüssigkeits- zu Dampf-Verhältnis zum Sollwert der Sumpfkonzentration führt. Mit der direkten Rückführung der Dampfmenge 18 über das Modell zurück zum Regler 7 wird die Dampfmenge 18 nur soweit reduziert, wie dies mit dem erniedrigten Leichtsiederanteil an der Messstelle 29 verträglich ist. Dies kann als eine inhärente Stellgrößenbeschränkung betrachtet werden. Die Praxis hat gezeigt, dass sich das System selbst bei starken Störungen robust verhält bei nur geringen Abweichungen des Istwertes vom Sollwert in der Übergangsphase.

Nachfolgend ist eine Liste der in den Gleichungen benutzten Symbole aufgeführt:

| | |
|---|---|
| $\vartheta_H$ | Temperatur am Kopf der Kolonne |
| $\vartheta_R$ | Temperatur der Rücklaufmenge |
| $\vartheta_{Feed}$ | Temperatur des Zulaufs |
| $\vartheta_{Kol,\,Fe}$ | Temperatur der Kolonne an der Zulaufstelle |
| $c_{Feed}$ | Spezifische Wärme des Stoffsystems im Zulauf |
| $c_{Ko}$ | Spezifische Wärme des Stoffsystems am Kopf der Kolonne |
| $r_{Feed}$ | Verdampfungswärme des Stoffsystems im Zulauf |
| $r_{Ko}$ | Verdampfungswärme des Stoffsystems am Kopf der Kolonne |
| $r_{Su}$ | Verdampfungswärme des Stoffsystems im Sumpf der Kolonne |
| $r_D$ | Verdampfungswärme des der Kolonne zugeführten Heizdampfes |
| m | Steigung der Tangente an die Gleichgewichtskurve des für das Stoffsystem und den Druck maßgebenden McCabe-Thiele-Diagramms am unteren linken Punkt (Leichtsiederanteil gleich Null) |
| $a$ | Flüssigkeits- zu Dampf-Verhältnis im Kolonnenteil zwischen Messstelle 29 und Sumpf 23 |
| F | Flüssigkeitsstrom im Kolonnenteil zwischen Messstelle 29 und Sumpf 23 |
| D | Dampfstrom im Kolonnenteil zwischen Messstelle 29 und Sumpf 23 |
| R | Rücklaufmenge, (extern) gemessen bei 11 |
| $R_{int}$ | Interner Flüssigkeitsstrom im obersten Kolonnenteil. Dieser ergibt sich aus der gemessenen Rücklaufmenge und dem kondensierten Dampfanteil der in der Kolonnen aufsteigenden Dämpfe, dessen Kondensationsenergie zur Anhebung der Rücklauftemperatur auf die Kolonnentemperatur benötigt wird. |
| $\dot{m}_{Feed}$ | Zulaufmenge, (extern) gemessen bei 2 |
| $\dot{m}_{Feed,int}$ | Flüssigkeitsstrom, der sich aus der gemessenen Zulaufmenge 2 und dem kondensierten Dampfanteil der aufsteigenden Dämpfe ergibt, dessen Kondensationsenergie zur Anhebung der Zulauftemperatur |

auf die Kolonnentemperatur an der Zulaufstelle benötigt wird.

| | |
|---|---|
| $\dot{m}_D$ | Dampfstrom 18 zur Kolonne |
| n | Theoretische Trennstufenzahl zwischen Messstelle 29 und Kolonnensumpf 23 |
| $X_{A,\,Su}$ | Vom Prozessmodell berechnete Konzentration der Komponente A im Produktstrom 14 in Molanteilen (entspricht der Konzentration im Sumpf) |
| $X_{A,\,online-Analyse}$ | Vom online-Analysengerät gemessene Konzentration der Komponente A an der Messstelle 29 in Molanteilen |
| $X_{A,\,Laboranalyse}$ | Mittels Laboranalyse gemessene Konzentration der Komponente A des Produktstroms 14 in Molanteilen |

**Patentansprüche**

1. Verfahren zur Prozessführung von Destillationskolonnen mit einem unteren Kolonnenteil (9) und einem oberen Kolonnenteil (10) unter Regelung der Sumpfkonzentration, wobei mehrere Komponenten A, B vorzugsweise mit eng beieinander liegenden Siedepunkten von einander getrennt werden und wobei die am Sumpf (23) des unteren Kolonnenteils (9) anfallende Stoffkomponente mit hoher Reinheit gewonnen wird, **dadurch gekennzeichnet,**

   a) **dass** die Konzentration der Komponenten A, B an einer Stelle (29) der Kolonne außerhalb des Sumpf- (23) oder Kopfbereiches (30) der Kolonne (9;10) insbesondere an einer Stelle (29), die im mittleren Bereich zwischen dem obersten Zehntel und dem untersten Zehntel der Länge der Gesamtkolonne (9,10) angeordnet ist, mit einem Analysengerät (3), insbesondere einem Nahinfrarot-Spektrometer online gemessen wird,
   b) **dass** die nach a) gemessene Konzentration mindestens einer der Komponenten A oder B von einem Online-Prozessmodell in einer Rechnereinheit (6) eines Prozessleitsystems (28) übernommen und benutzt wird, und dass das Prozessmodell unter Verwendung des Messwertes und weiterer direkt an der Kolonne (9, 10) gemessenen Größen ausgewählt aus Temperatur, Druck und Stoff-Mengenströme, insbesondere von Zulauf (15), Rücklauf (22) und Heizmittelzufuhr, insbesondere Dampfzufuhr (18), eine Sumpfkonzentration $X_{Asu}$ berechnet innerhalb einer durch das Prozessleitsystem (28) und die Regelungstechnik bedingten Intervallzeit,
   c) **dass** die unter Verwendung des Prozessmodells berechnete Sumpfkonzentration $X_{Asu}$ zur Regelung verwendet wird, indem die vom Modell berechnete Sumpfkonzentration $X_{Asu}$ regelungstechnisch wie der Istwert der Regelgröße der Sumpfkonzentration behandelt wird,
   d) **dass** bestimmte Parameter des Prozessmodells physikalisch interpretierbare Größen, insbesondere die theoretische Stufenzahl bezogen auf Packungen oder Füllkörper und/oder den Bodenwirkungsgrad darstellen, die in größeren Zeitintervallen insbesondere von mehreren Stunden dem jeweiligen Kolonnenzustand, z.B. dem Verschmutzungsgrad, angepasst werden auf der Basis von Analysen des Endproduktes und Eingabe der Analysendaten in das Prozessmodell.

2. Verfahren nach Anspruch 1, **dadurch gekennzeichnet, dass** die Kolonne in mindestens zwei Teilkolonnen (9) und (10) aufgeteilt ist, und dass die Konzentrationsmessung a) zwischen den Teilkolonnen (9) und (10) erfolgt.

3. Verfahren nach Anspruch 2, **dadurch gekennzeichnet, dass** anstelle der Temperaturen und Mengenströme von Zulauf (15) und Rücklauf (22) sowie der Heizenergie, insbesondere der Dampfmenge (18) auch die Mengenströme zwischen den beiden Kolonnenteilen (9, 10) sowie deren Temperaturen im Prozessmodell verwendet werden.

4. Verfahren nach einem der Ansprüche 1 bis 3, **dadurch gekennzeichnet, dass** das Analysengerät zwischen dem obersten Fünftel und dem untersten Fünftel der Länge der Gesamtkolonne (9, 10) angeordnet ist.

5. Verfahren nach einem der Ansprüche 1 bis 4, **dadurch gekennzeichnet, dass** als Analysengerät ein NIR-Spektrometer, UV-VIS Spektrometer, Flüssigkeitschromatograph oder Gaschromatograph eingesetzt wird.

6. Verfahren nach einem der Ansprüche 1 bis 5, **dadurch gekennzeichnet, dass** als weitere Größen die Temperatur im Kopf (24) der Kolonne und im Zulaufbereich (27) der Kolonne (10) für das Prozessmodell verwendet wird.

7. Verfahren nach Anspruch 1 bis 6, **dadurch gekennzeichnet, dass** Stoffgemische A, B mit höchstens 20 K, insbesondere höchstens 10 K auseinander liegenden Siedepunkten getrennt werden.

8. Verfahren nach Anspruch 1 bis 7, **dadurch gekennzeichnet, dass** die Kombination von Online-Analytik und Prozessmodell auch zur Konzentrationsregelung des Kopfproduktes verwendet werden kann.

**Claims**

1. Method for process control of distillation columns having a lower column section (9) and an upper column section (10) with control of the liquid phase concentration to separate a plurality of components A, B preferably having boiling points very close together and to obtain the component obtained at the bottom (23) of the lower column section (9) in high purity, **characterized in that**

   a) the concentration of the components A, B is measured online at one point (29) in the column outside the bottom (23) or top region (30) of the column (9; 10), in particular at a point (29) which is disposed in the middle region between the uppermost tenth and the lowermost tenth of the length of the overall column (9, 10), using an analytical instrument (3), in particular a near infrared spectrometer,
   b) the concentration measured in a) of at least one of the components A or B is taken and used by an online process model in a computer unit (6) of a process control system (28), and **in that** the process model, within an interval time determined by the process control system (28) and the control technique, calculates a liquid phase concentration $X_{ALP}$ using the measurement and further parameters measured directly in the column (9, 10) selected from temperature, pressure and mass flows, in particular of feed (15), reflux (22) and heating medium feed, in particular vapor feed (18),
   c) the liquid phase concentration ALP calculated using the process model is used for control, by treating the liquid phase concentration $X_{ALP}$ calculated by the model for control purposes as the actual value of the liquid phase concentration control parameter,
   d) certain parameters of the process model constitute physically interpretable parameters, in particular the number of theoretical plates of structured packings or random packings and/or the degree of tray efficacy, which are adapted within prolonged time intervals, in particular of several hours, to the particular column conditions, for example the degree of fouling, on the basis of analyses of the end product and introduction of the analytical data into the process model.

2. Method according to Claim 1, **characterized in that** the column is divided into at least two subcolumns (9) and (10), and the concentration is measured a) between the subcolumns (9) and (10).

3. Method according to Claim 2, **characterized in that**, instead of the temperatures and mass flows of feed (15) and reflux (22) and also the heat energy, in particular the amount of vapor (18), the mass flows between the two column sections (9, 10) and also their temperatures are also used in the process model.

4. Method according to any of Claims 1 to 3, **characterized in that** the analytical instrument is disposed between the uppermost fifth and the lowermost fifth of the length of the overall column (9, 10).

5. Method according to any of Claims 1 to 4, **characterized in that** the analytical instrument used is an NIR spectrometer, UV-VIS spectrometer, liquid chromatograph or gas chromatograph.

6. Method according to any of Claims 1 to 5, **characterized in that** the further parameters used for the process model are the temperature at the top (24) of the column and in the feed region (27) of the column (10).

7. Method according to Claims 1 to 6, **characterized in that** the A, B mixtures separated have boiling points separated by at most 20 K, in particular at most 10 K.

8. Method according to Claims 1 to 7, **characterized in that** the combination of online analysis and process model can also be used for concentration control of the top product.


**Revendications**

1. Procédé de commande de colonnes de distillation comprenant une zone de colonne inférieure (9) et une zone de colonne supérieure (10) pour réguler la concentration de fond, plusieurs composants A, B qui ont de préférence des points d'ébullition qui se côtoient étroitement étant séparés les uns des autres et le composant qui est produit au fond (23) de la zone de colonne inférieure (9) étant obtenu avec une pureté élevée, **caractérisé en ce que**

   a) la concentration des composants A, B est mesurée en ligne avec un appareil d'analyse (3), notamment un spectromètre infrarouge, à un emplacement (29) de la colonne situé à l'extérieur de la zone de fond (23) ou de tête (30) de la colonne (9 ; 10), notamment à un emplacement (29) situé dans la zone intermédiaire entre le dixième supérieur et le dixième inférieur de la longueur totale de la colonne (9, 10),

b) la concentration mesurée selon a) d'au moins un des composants A ou B est prise en charge et utilisée par un modèle de procédé en ligne dans une unité de calcul (6) d'un système de gestion de procédé (28), et le modèle de procédé calcule une concentration de fond $X_{ASu}$ dans un intervalle de temps conditionné par le système de gestion de procédé (28) et la technique de régulation en utilisant la valeur mesurée et d'autres grandeurs mesurées directement dans la colonne (9, 10), choisies parmi la température, la pression et les débits de substances, notamment de l'alimentation (15), du reflux (22) et de l'alimentation d'agent chauffant, notamment de l'alimentation de vapeur (18),

c) la concentration de fond $X_{ASu}$ calculée en utilisant le modèle de procédé est utilisée pour la régulation en traitant, au regard de la régulation, la concentration de fond $X_{ASu}$ calculée par le modèle comme la valeur réelle de la variable de la concentration de fond,

d) des paramètres déterminés du modèle de procédé constituent des grandeurs interprétables physiquement, notamment le nombre d'étapes théoriques par rapport à des garnissages ou corps de remplissage et/ou le degré d'efficacité des plateaux, qui sont adaptées à des intervalles de temps plus grands, notamment de plusieurs heures, à l'état respectif de la colonne, p. ex. le degré d'encrassement, en fonction d'analyses du produit final et de l'entrée de données analytiques dans le modèle de procédé.

**2.** Procédé selon la revendication 1, **caractérisé en ce que** la colonne est divisée en au moins deux parties de colonne (9) et (10) et **en ce que** la mesure de concentration a) a lieu entre les parties de colonne (9) et (10).

**3.** Procédé selon la revendication 2, **caractérisé en ce que** les débits entre les deux parties de colonne (9, 10) et leurs températures sont utilisés dans le modèle de procédé à la place des températures et des débits de l'alimentation (15) et du reflux (22), ainsi que de l'énergie de chauffage, notamment de la quantité de vapeur (18).

**4.** Procédé selon l'une quelconque des revendications 1 à 3, **caractérisé en ce que** l'appareil d'analyse est placé entre le cinquième supérieur et le cinquième inférieur de la longueur totale de la colonne (9, 10).

**5.** Procédé selon l'une quelconque des revendications 1 à 4, **caractérisé en ce qu'**un spectromètre NIR, un spectromètre UV-VIS, un chromatographe en phase liquide ou un chromatographe en phase gazeuse est utilisé en tant qu'appareil d'analyse.

**6.** Procédé selon l'une quelconque des revendications 1 à 5, **caractérisé en ce que** la température à la tête (24) de la colonne et dans la zone d'alimentation (27) de la colonne (10) sont utilisées en tant que grandeurs supplémentaires pour le modèle de procédé.

**7.** Procédé selon les revendications 1 à 6, **caractérisé en ce que** des mélanges de substances A, B ayant des points d'ébullition espacés d'au plus 20 K, notamment d'au plus 10 K, sont séparés.

**8.** Procédé selon les revendications 1 à 7, **caractérisé en ce que** la combinaison d'une analyse en ligne et d'un modèle de procédé peut également être utilisée pour la régulation de la concentration du produit de tête.

EP 1 429 857 B1

# Fig. 1a

A (30%)
B (70%)

A (70%)
B (30%)

A (99.70%)

Fig. 1b

## EP 1 429 857 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5260865 A